(19) Europäisches Patentamt / European Patent Office / Office européen des brevets

(11) **EP 4 005 671 A1**

(12) **EUROPEAN PATENT APPLICATION**
published in accordance with Art. 153(4) EPC

(43) Date of publication:
**01.06.2022 Bulletin 2022/22**

(21) Application number: **19955408.0**

(22) Date of filing: **13.12.2019**

(51) International Patent Classification (IPC):
**B01J 29/65** (2006.01)      **B01J 29/69** (2006.01)
**B01D 53/94** (2006.01)

(52) Cooperative Patent Classification (CPC):
**B01D 53/94; B01J 29/65; B01J 29/69**

(86) International application number:
**PCT/CN2019/125057**

(87) International publication number:
**WO 2021/114208 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nankai University
Tianjin 300071 (CN)**

(72) Inventors:
- **CHEN, Haijun
  Tianjin 300350 (CN)**
- **HAN, Fei
  Tianjin 300350 (CN)**
- **YUAN, Mengqi
  Tianjin 300350 (CN)**
- **QIAN, Dongyue
  Tianjin 300350 (CN)**
- **SUN, Han
  Tianjin 300350 (CN)**

(74) Representative: **Elsy, David
  Withers & Rogers LLP
  2 London Bridge
  London SE1 9RA (GB)**

(54) **DENITRATION CATALYST AND DENITRATION METHOD USING THE CATALYST**

(57)      Disclosed is a FER-type zeolite having at least silicon, aluminum, and oxygen as skeletal atoms, where a molar ratio between silicon atoms to aluminum atoms is 2-100:1. In addition, when $^{29}Si$ solid nuclear magnetic resonance spectroscopy is used to analyze the zeolite, a peak area in the chemical shift range of -90 ppm to -110 ppm accounts for 25% or more of a peak area in the chemical shift range of -90 ppm to -125 ppm. Also disclosed are a preparation method for and an application of the FER zeolite.

Fig. 2

**Description**

TECHNICAL FIELD

The present disclosure relates to the field of denitration, and more specifically relates to a denitration catalyst and a denitration method using the same.

BACKGROUND

Nitrogen oxides ($NO_x$) are highly irritant and corrosive, and will cause damage to the human health. In addition, the nitrogen oxides in atmosphere also tend to interact with other harmful compounds to generate harmful substances, such as a sulfate, a nitrate or the like. At present, as a major flue gas denitration technology, selective catalytic reduction (SCR) selectively reacts the nitrogen oxides in a flue gas with the reducing agent (ammonia or ammonia generated from urealysis) under the effect of a catalyst, to generate nitrogen and water, thereby removing the nitrogen oxides (NH3-SCR denitration process).

However, in the treatment of an industrial waste gas produced in a high-sulfur fuel industry such as coal and heavy oil, such fuels will produce a certain amount of sulfur oxide in the industrial process, and due to the presence of the catalyst, the production of sulfur trioxide will be significantly increased under an oxygen-rich condition. The sulfur oxide will react with ammonia gas which is used as the reducing agent to generate ammonium sulfate. The ammonium sulfate is corrosive and sticky, and tends to adhere to the surface of an object, which not only easily causes catalyst deactivation, but also will cause damage to a flue device. While many documents report to attempt to enhance the sulfur resistance of the catalyst by improving an ingredient of the catalyst, it is very difficult to fundamentally solve the problems, such as the catalyst surface being contaminated and deactivated and the flue device being blocked, caused by the generation of ammonium sulfate in an industrial waste gas treatment system, as long as ammonia is used as the reducing agent.

Since a lower alcohol does not tend to react with the sulfur oxide to generate a sediment similar to ammonium sulfate, the cheap lower alcohol is used as a reducing agent instead of ammonia to selectively catalytically reduce the nitrogen oxides to generate nitrogen (alcohol-SCR denitration process), thereby avoiding the problems, such as catalyst deactivation and device failure, caused by the generation of ammonium sulfate. In addition, the lower alcohol or an aqueous solution thereof is easier to be stored safely than ammonia, and the problems, such as pipeline blockage, caused by easy precipitation of urea from an aqueous solution of urea at a low temperature.

Non-patent documents [1, 2] conduct selective catalytic reduction denitration on an alumina-supported silver-based catalyst using ethanol as the reducing agent, but the catalytic reaction temperature is relatively high, and a highest conversion rate can be reached only at about 400 °C. Non-patent document [3] modifies alumina with Zn to achieve the purpose of improving the ethanol-SCR catalytic activity of the catalyst. The research results of these documents show that the highest conversion temperature for the nitrogen oxides on the catalyst is about 400 °C. Non-patent document [4] studies the ethanol-SCR catalytic performance of a BEA molecular sieve-supported silver catalyst, which has a highest conversion temperature of about 300 °C, but a low conversion efficiency (<30%). Non-patent document [5] prepares a BEA molecular sieve-supported iron, cobalt or other transition metal catalyst, and compares the catalytic denitration reactivity of such catalysts with methanol and ethanol as the reducing agent, respectively. The result shows that: the catalytic denitration performance with ethanol as the reducing agent is higher, but the highest conversion rate can be achieved only after the reaction temperature still reaches 300 °C or higher. Non-patent document [6] finds that after comparing the catalytic activity of a perovskite material $LaFe_{0.8}Cu_{0.2}O_3$ and an alumina-supported silver-based catalyst ($Ag/Al_2O_3$) using methanol as the reducing agent, the catalytic denitration performance of $LaFe_{0.8}Cu_{0.2}O_3$ is significantly improved than that of the $Ag/Al_2O_3$ catalyst, but the temperature range for achieving the highest conversion rate is still 300 °C or higher, thus failing to meet the requirements for denitration of industrial waste gases, especially low-speed marine diesel tail gas, at a low temperature.

Patent documents [1, 2, 3] disclose a method for catalytically denitrating an industrial waste gas using a sodium-type molecular sieve-supported cobalt-based catalyst with alcohol as the reducing agent. However, the denitration efficiency of such catalyst is low. In order to improve the denitration efficiency, the reaction activity of the catalyst is improved by further adding an alkali metal ion. However, the addition of the alkali metal ion generally will destroy the structural stability of the molecular sieve, thereby resulting in insufficient hydrothermal stability of the catalyst, and failing to meet the requirements for practical application of the catalyst. In addition, during use of such a catalyst, the catalyst is also prone to deactivation due to the coking of organics in the molecular sieve. Patent document 4 discloses a method for preparing a bismuth-containing molecular sieve catalyst by dissolving a bismuth source in an alcohol solvent, and then supporting bismuth on a molecular sieve. When methanol is used as the reducing agent for industrial waste gas denitration, this bismuth-containing molecular sieve catalyst has a better conversion rate of nitric oxide (NO) in a low temperature range, but has poor selectivity, thereby generating a large amount of nitrous oxide ($N_2O$) by-product. $N_2O$

is not only an air pollutant, but also a greenhouse gas. Therefore, this catalyst cannot be practically applied to an industrial denitration purification process.

Prior art documents

Non-patent document 1: ACS Catal., 2018, 8 (4) 2699-2708
Non-patent document 2: Environ. Sci. Technol., 2015 (49) 481-488
Non-patent document 3: Appl. Catal. B-Environ., 2012 (126) 275-289
Non-patent document 4: Microporous Mesoporous Mater, 2015, 203, 163-169
Non-patent document 5: Appl. Catal. B-Environ., 2012 (123-124) 134-140
Non-patent document 6: J. Catal., 377 (2019) 480-493
Patent document 1: WO2013146729
Patent document 2: JP2013226544
Patent document 3: JP2014172007
Patent document 4: WO2017057736

SUMMARY

The technical problems to be solved:

The present disclosure solves the problems of low reaction activity of the catalyst and poor selectivity for conversion to nitrogen when a lower alcohol containing 6 carbon atoms or less is used as a reducing agent for selective catalytic reduction denitration. The present disclosure provides an alcohol-SCR denitration catalyst with high activity and high nitrogen selectivity, thereby solving the problems, such as catalyst deactivation and flue device blockage, caused by the generation of ammonium sulfate when a high-sulfur industrial waste gas is treated using an NH3-SCR denitration process.

Technical solutions solving the technical problems:

The inventors of the present disclosure have found through in-depth researches on the above technical problems that the above one or more technical problems can be solved through the following technical solutions.
According to a first aspect of the present disclosure, a FER-type zeolite is provided, where the zeolite at least includes silicon, aluminum, and oxygen as skeletal atoms, where the molar ratio of silicon atoms to aluminum atoms is 2-100:1, and when the zeolite is analyzed by $^{29}$Si solid nuclear magnetic resonance (NMR) spectrum, a peak area in a chemical shift range from -90 to -110 ppm accounts for 25% or more of a peak area in a chemical shift range from -90 to -125 ppm.
In an embodiment, the mole number of the aluminum atoms accounts for 1% to 33% of a total mole number of non-oxygen atoms in the zeolite. In another embodiment, the cations outside the skeleton of the zeolite further include a hydrogen ion. In an embodiment, the skeletal atoms of the zeolite further include an atom of one or more of other elements selected from the group consisting of titanium, zirconium, vanadium, chromium, manganese, iron, cobalt, zinc, gallium, germanium, arsenic, tin, and boron. In another embodiment, the zeolite further includes a cation of one or more metals selected from the group consisting of an alkali metal, an alkali earth metal, a rare earth metal, and a transition metal.
In an embodiment, the mole number of atoms of the other elements accounts for 40% or less of the total mole number of the non-oxygen atoms in the zeolite. In another embodiment, the mole number of the atoms of the other elements accounts for 30% or less of the total mole number of the non-oxygen atoms in the zeolite. In still another embodiment, the mole number of the atoms of the other elements accounts for 20% or less of the total mole number of the non-oxygen atoms in the zeolite.
According to a second aspect of the present disclosure, a bismuth-containing FER-type zeolite is provided, where the zeolite at least includes silicon, aluminum, and oxygen as skeletal atoms, where the molar ratio of silicon atoms to aluminum atoms is 2-100:1, and when the zeolite is analyzed by $^{27}$Al solid NMR spectrum, a peak area in a chemical shift range from -50 to 40 ppm accounts for 28% or more of a peak area in a chemical shift range from -50 to 150 ppm.
In an embodiment, the content of bismuth is 0.05 mass % or more and 20 mass % or less. In still another embodiment, a mole number of the silicon atoms accounts for 50 mass % to 95 mass % of the total mole number of the non-oxygen atoms in the zeolite. In yet another embodiment, the cations outside the skeleton of the zeolite further include a hydrogen ion. In another embodiment, the skeletal atoms of the zeolite further include an atom of one or more of other elements selected from the group consisting of titanium, zirconium, vanadium, chromium, manganese, iron, cobalt, zinc, gallium, germanium, arsenic, tin, and boron. In still another embodiment, the zeolite further includes a cation of one or more metals selected from the group consisting of an alkali metal, an alkali earth metal, a rare earth metal, and a transition metal.

In an embodiment, the mole number of atoms of the other elements accounts for 40% or less of the total mole number of the non-oxygen atoms in the zeolite. In another embodiment, the mole number of the atoms of the other elements accounts for 30% or less of the total mole number of the non-oxygen atoms in the zeolite. In still another embodiment, the mole number of the atoms of the other elements accounts for 20% or less of the total mole number of the non-oxygen atoms in the zeolite.

According to a third aspect of the present disclosure, a method for preparing the FER-type zeolite described herein is provided, including: (a) mixing a mixture at least comprising a silicon source, an aluminum source, an organic template, and an optional inorganic base in water to obtain an initial gel; (b) subjecting the initial gel to a hydrothermal synthesis reaction to obtain a reaction product; and (c) calcinating the reaction product and removing the organic template to obtain the FER-type zeolite, wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to obtain the FER-type zeolite.

In an embodiment, in the initial gel, the molar ratio of the silicon source, the aluminum source, the organic template R, the optional inorganic base AOH, and the water is 5-100 $SiO_2$: 1 $Al_2O_3$: 5-50 R: 2-20 $A_2O$: 200-2000 $H_2O$. In another embodiment, the organic template comprises one or more nitrogen-containing alicyclic heterocyclic compounds. In still another embodiment, the organic template is one or more compounds selected from the group consisting of pyrrolidine, morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, N-methylpyrrolidone, and hexamethyleneimine. In another embodiment, the organic template is one or more compounds selected from the group consisting of pyrrolidine, morpholine, hexamethyleneimine, and piperidine. In still another embodiment, the organic template is pyrrolidine.

According to a fourth aspect of the present disclosure, a method for preparing the bismuth-containing FER-type zeolite described herein is provided, including: (a) mixing a mixture at least comprising a silicon source, an aluminum source, an organic template, and an optional inorganic base in water to obtain a hydrogel, and mixing the hydrogel and a solution of a bismuth source dissolved in an organic solvent to obtain an initial gel; (b) subjecting the initial gel to a hydrothermal synthesis reaction to obtain a reaction product; and (c) calcinating the reaction product and removing the organic template to obtain the FER-type zeolite, wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to obtain the FER-type zeolite.

In addition, the present disclosure further provides a method for preparing the bismuth-containing FER-type zeolite described herein, including: (a) mixing a mixture at least comprising a silicon source, an aluminum source, an organic template, and an optional inorganic base in water to obtain an initial gel; (b) subjecting the initial gel to a hydrothermal synthesis reaction to obtain a reaction product; (c) calcinating the reaction product and removing the organic template to obtain a zeolite; and (d) conducting ion exchange or impregnation of the zeolite and a bismuth source in an organic solvent, and then conducting calcination to obtain the FER-type zeolite, wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to obtain the zeolite in step (c).

In an embodiment, in the initial gel, the molar ratio of the silicon source, the aluminum source, the bismuth source, the organic template R, the optional inorganic base AOH, and the water is 5-100 $SiO_2$: 1 $Al_2O_3$: 0-0.5 $Bi_2O_3$: 5-50 R: 2-20 $A_2O$: 200-2000 $H_2O$. In another embodiment, the organic template comprises one or more nitrogen-containing alicyclic heterocyclic compounds. In still another embodiment, the organic template is one or more compounds selected from the group consisting of pyrrolidine, morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, N-methylpyrrolidone, and hexamethyleneimine. In another embodiment, the organic template is one or more compounds selected from the group consisting of pyrrolidine, morpholine, hexamethyleneimine, and piperidine. In still another embodiment, the organic template is pyrrolidine.

According to a fifth aspect of the present disclosure, a catalytic reactor for purifying nitrogen oxides is provided, wherein the catalytic reactor comprises the FER-type zeolite described herein or the FER-type zeolite prepared using the method described herein as a denitration catalyst.

According to a sixth aspect of the present disclosure, a system for purifying nitrogen oxides is provided, wherein the system is provided with the catalytic reactor for purifying the nitrogen oxides described herein.

According to a seventh aspect of the present disclosure, a denitration method is provided, including conducting selective catalytic reduction denitration using the FER-type zeolite described herein or the FER-type zeolite prepared using the method described herein as a denitration catalyst, and using an alcohol containing 6 carbon atoms or less as a reducing agent.

According to an eighth aspect of the present disclosure, use of the FER-type zeolite described herein or the FER-type zeolite prepared using the method described herein in a process of selective catalytic reduction denitration is provided, e.g., in a process of selective catalytic reduction denitration using an alcohol containing 6 carbon atoms or less as a reducing agent.

The zeolite described herein or the zeolite prepared using the method described herein can effectively solve the problems of low activity and poor selectivity of the catalyst for selective catalytic reduction denitration using a lower alcohol as the reducing agent in the prior art, thereby effectively implementing the catalytic purification of nitrogen oxides, especially the selective catalytic reduction of nitrogen oxides. Therefore, the zeolite described herein can be widely used in power plants, industrial kilns, internal combustion engines, and the like as a catalyst for industrial waste gas denitration, thereby effectively removing the emitted waste gas of nitrogen oxides.

BRIEF DESCRIPTION OF THE DRAWINGS

Embodiments illustrated herein are further described below with reference to the accompanying drawings. However, the accompanying drawings are provided only to allow those skilled in the art to better understand the present disclosure, and are not intended to limit the scope of the present disclosure.

Fig. 1 is an XRD pattern of a molecular sieve A prepared according to an example of the present disclosure;
Fig. 2 is a $^{29}$Si solid NMR spectrum of the molecular sieve A prepared according to an example of the present disclosure;
Fig. 3 is a $^{29}$Si solid NMR spectrum of a molecular sieve B prepared according to an example of the present disclosure;
Fig. 4 is a $^{29}$Si solid NMR spectrum of a molecular sieve C prepared according to an example of the present disclosure;
Fig. 5 is a $^{29}$Si solid NMR spectrum of a molecular sieve D prepared according to an example of the present disclosure;
Fig. 6 is a $^{29}$Si solid NMR spectrum of a molecular sieve E prepared according to a comparative example of the present disclosure;
Fig. 7 is a $^{27}$Al solid NMR spectrum of a molecular sieve F prepared according to an example of the present disclosure;
Fig. 8 is a $^{27}$Al solid NMR spectrum of a molecular sieve G prepared according to an example of the present disclosure;
Fig. 9 is a $^{27}$Al solid NMR spectrum of a molecular sieve H prepared according to an example of the present disclosure;
Fig. 10 is a $^{27}$Al solid NMR spectrum of a molecular sieve I prepared according to an example of the present disclosure;
Fig. 11 is a $^{27}$Al solid NMR spectrum of a molecular sieve J prepared according to an example of the present disclosure;
Fig. 12 is a $^{27}$Al solid NMR spectrum of a molecular sieve K prepared according to a comparative example of the present disclosure;
Fig. 13 is a $^{27}$Al solid NMR spectrum of a molecular sieve L prepared according to a comparative example of the present disclosure; and
Fig. 14 is a $^{27}$Al solid NMR spectrum of a molecular sieve M prepared according to a comparative example of the present disclosure.

DETAILED DESCRIPTION OF EMBODIMENTS

The inventive concepts of the present disclosure will be further illustrated bellow in conjunction with specific embodiments. However, the specific embodiments are listed for illustrative purposes only, and are not intended to limit the scope of the present disclosure. As will be appreciated by those skilled in the art, specific features in any one of the following embodiments may be used for any other embodiment, as long as they do not deviate from the inventive concepts described herein.

Zeolite

The zeolite as used herein refers to a FER-type zeolite specified by the International Zeolite Association (hereinafter referred to as IZA). The zeolite is generally a regular mesh structure formed by sharing and connecting oxygen atoms at vertexes of a skeletal tetrahedron (such as $SiO_4$ tetrahedron, $AlO_4$ tetrahedron, or $PO_4$ tetrahedron, and an atom of an element other than oxygen is generally referred to as a non-oxygen atom or T atom). The structure of the FER-type zeolite may be determined by X-ray diffraction (XRD), which needs to at least detect the interplanar distances d (Å) shown in Table 1 below. That is, a zeolite has the interplanar distances shown in Table 1 below may be considered as a FER-type molecular sieve.

Table 1

| d-distance d (Å) | Relative intensity [100×I/I(0)] |
| --- | --- |
| 9.4±0.2 | 100 |
| 7.0±0.1 | 23 |
| 6.7±0.1 | 21 |
| 5.7±0.1 | 11 |
| 5.6±0.1 | 11 |
| 4.9±0.1 | 14 |
| 3.9±0.1 | 52 |
| 3.7±0.05 | 39 |
| 3.6±0.05 | 33 |
| 3.5±0.05 | 65 |
| 3.4±0.05 | 62 |
| 3.3±0.05 | 27 |
| 3.1±0.1 | 27 |

When the FER-type zeolite described herein is analyzed by $^{29}$Si solid NMR spectrum, its peak area in a chemical shift range from -90 to -110 ppm accounts for 25% or more of its peak area in a chemical shift range from -90 to -125 ppm. When the bismuth-containing FER-type zeolite described herein is analyzed by $^{27}$Al solid NMR spectrum, its peak area in a chemical shift range from -50 to 40 ppm accounts for 28% or more of its peak area in a chemical shift range from -50 to 150 ppm. It is found through researches that the zeolite with the above features has a high catalytic activity for alcohol-SCR denitration and excellent nitrogen selectivity.

While it is not expected to be bound by any theory, it is believed that the bismuth-free zeolite described herein has excellent catalytic denitration performance, which may be attributed to the distribution of skeletal silicon atoms at specific sites in the FER-type zeolite. It is generally believed that a characteristic peak within the chemical shift range from -90 to -110 ppm in the $^{29}$Si solid NMR spectrum reflects the information of skeletal silicon connected to skeletal Al. The higher the area ratio of absorption peaks in this range is, the more the acid active sites of the FER-type zeolite are, and the higher the alcohol-SCR catalytic activity of the FER zeolite is.

Further, for the bismuth-containing zeolite described herein, it is believed that its peak area in the chemical shift range from -50 to 40 ppm in the $^{27}$Al solid NMR spectrum reflects the information of non-tetracoordinate aluminum in the zeolite. The higher the area ratio of absorption peak in this range is, the higher the content of non-skeletal aluminum in the zeolite is. For the bismuth-containing FER-type zeolite, the higher the content of non-skeletal aluminum is, the greater the interaction between bismuth and non-skeletal aluminum is, thereby resulting in excellent catalytic activity and catalytic selectivity.

Therefore, when the FER-type zeolite described herein is analyzed by $^{29}$Si solid NMR spectrum, its peak area in the chemical shift range from -90 to -110 ppm accounts for 25% or more, e.g., 30% or more, 35% or more, 40% or more, or 45% or more, of its peak area in the chemical shift range from -90 to -125 ppm. When the bismuth-containing FER-type zeolite described herein is analyzed by $^{27}$Al solid NMR spectrum, its peak area in the chemical shift range from -50 to 40 ppm accounts for 28% or more, e.g., 30% or more, 35% or more, or 40% or more, of its peak area in the chemical shift range from -50 to 150 ppm.

The zeolite as used herein refers to a zeolite at least comprising oxygen, aluminum, and silicon as the atoms constituting a skeleton structure, and a portion of skeletal atoms may be substituted with one or more elements other than the above three elements. A ratio (molar ratio) of silicon to aluminum constituting the zeolite is not particularly limited. In an embodiment, the molar ratio of silicon atoms to aluminum atoms is 2-100:1, e.g., 2:1, 5:1, 10:1, 15:1, 20:1, 30:1, 40:1, or 50:1. In another embodiment, the mole number of the aluminum atoms accounts for 1% to 33%, e.g., 2%, 3%, 4%, 5%, 10%, 15%, 20%, 25%, or 30%, of the total mole number of non-oxygen atoms in the zeolite. In still another embodiment, the mole number of the silicon atoms accounts for 50% to 95%, e.g., 55%, 60%, 65%, 70%, 75%, 80%, 85%, 90%, or 95%, of the total mole number of the non-oxygen atoms in the zeolite.

In the zeolite herein, the site of bismuth in the zeolite and its specific chemical valence state are not particularly limited. Bismuth may exist in the skeleton of the zeolite, or may exist outside the skeleton of the zeolite. From the perspective of catalytic activity, bismuth preferably exists outside the skeleton. In an embodiment, a mass percent of bismuth is from 0.05% to 20%, e.g., from 0.1% to 10%, or may be any value within the above ranges, e.g., 0.5%, 1%, 2%, 3%, 4%, 5%, 6%, 7%, 8%, 9%, or 10%. When the bismuth content is less than 0.05%, the low-temperature activity tends to decrease, and the catalytic activity is insufficient. When the bismuth content is more than 20%, an aggregated bismuth oxide usually tends to be generated, thereby reducing the catalytic performance.

In addition, the zeolite described herein may also comprise other elements than oxygen, aluminum, and silicon, such as phosphorus, titanium, zirconium, vanadium, chromium, manganese, iron, cobalt, zinc, gallium, germanium, arsenic, tin, boron and the like. The content of an atom of other elements accounts for 40% or less, preferably 30% or less, and more preferably 20% or less, of the total mole number of the non-oxygen atoms in the zeolite. In addition to comprising the components constituting a skeletal structure of the zeolite, zeolite in the present disclosure may further comprise a cationic component outside the skeleton. The cation is not particularly limited, e.g., may be an alkali metal element such as H, Li, Na, or K, or an alkali earth metal element such as Mg, or Ca, or a rare earth metal element such as La or Ce, or a transition metal element such as Cu or Fe, and is preferably a hydrogen cation.

Synthesis of zeolite

In the present disclosure, the zeolite is synthesized by hydrothermal synthesis, including preparing an initial gel (hereinafter also referred to as a hydrogel) from raw materials and water, and then conducting hydrothermal synthesis reaction on the initial gel in a reactor, thereby synthesizing the zeolite.

<Raw materials>

The raw materials used in a manufacturing process of a FER-type molecular sieve described herein mainly include a silicon raw material, an aluminum raw material, an optional bismuth raw material, a nitrogen-containing alicyclic heterocyclic compound as a template (i.e., an organic template), an optional inorganic base, and water. In addition, a component having a promoting effect on crystallization, such as a seed crystal, may also be added.

The silicon raw material (also referred to as silicon source herein) may also be 1, or 2, or more of colloidal silicon dioxide, amorphous silicon dioxide, fumed silica, water glass (sodium silicate), trimethylethoxysilane, tetraethyl orthosilicate, aluminum silicate gel, and the like. The aluminum raw material (also referred to as an aluminum source herein) may also be 1, or 2, or more of aluminum sulfate, aluminum nitrate, sodium aluminate, aluminum oxide, aluminum hydroxide, boehmite, aluminum chloride, aluminum silicate gel, metal aluminum, and the like. The bismuth raw material (also referred to as a bismuth source herein) may also be 1, or 2, or more of bismuth nitrate, bismuth phosphate, bismuth sulfate, bismuth acetate, bismuth chloride, bismuth chlorate, and the like. These raw materials are not particularly limited, as long as they can be fully mixed with other ingredients.

The inorganic base may be 1, or 2, or more of an alkali metal hydroxide such as sodium hydroxide, potassium hydroxide, rubidium hydroxide, and cesium hydroxide, an aluminate mentioned in the above aluminum raw material, or an alkali component in the silicate or an alkali component in the silicate gel mentioned in the above silicon raw material. In the manufacturing process of the molecular sieve, at least one metal ion selected from the group consisting of lithium, sodium, potassium, rubidium, cesium, calcium, magnesium, strontium, and barium is preferably used as an alkali metal ion or an alkali earth metal ion for crystallization. By comprising these alkali metal ions, crystallization is easily conducted, and by-products (impurity crystals) can hardly be generated. It should be noted that the molar ratio of components in a gel is computed generally based on the corresponding oxide $A_2O$ of an inorganic base AOH.

The structure of the synthesized zeolite is related to the selected template. In an embodiment, the template may be a nitrogen-containing alicyclic heterocyclic compound, such as pyrrolidine, morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, N-methylpyrrolidone, hexamethyleneimine and the like, preferably pyrrolidine, morpholine, hexamethyleneimine, or piperidine, and particularly preferably pyrrolidine.

<Preparation of an aluminum raw material solution>

The aluminum raw material solution is prepared by dissolving the above aluminum raw material in water. The aluminum raw material concentration of the aluminum raw material solution is preferably from 5% to 50% by weight, and particularly preferably from 10% to 40% by weight, in consideration of ease of gel preparation and production efficiency.

It should be noted that the aluminum raw material solution is substantially free of a silicon atom. Here, the "substantially free of" means that the silicon content in the aluminum raw material solution is 1% or less by weight, and preferably silicon is not comprised at all.

<Preparation of a bismuth raw material solution>

The bismuth raw material solution is prepared by dissolving the above bismuth raw material (also referred to as a bismuth source herein) in a liquid. Bismuth ions are easily hydrolyzed in an aqueous solution, thereby resulting in precipitation. Therefore, the bismuth raw material is dissolved in an organic solvent, such as ethylene glycol, glycerol, toluene, or other organic solvents. The concentration is preferably from 1% to 20% by weight, and particularly preferably from 2% to 10% by weight, in consideration of ease of gel preparation and production efficiency.

<Preparation of a hydrogel>

An inorganic base is added to an aqueous solution to prepare an inorganic base solution. Then, the inorganic base solution, the silicon raw material solution, the aluminum raw material solution, and the organic template are fully mixed to prepare a gel-like mixture, which is a hydrogel for the next reaction. If it is intended to prepare a bismuth-containing zeolite, the bismuth raw material solution may be uniformly added to the above gel-like mixture to provide the hydrogel for the next reaction.

In the process of preparing the gel-like mixture, an addition speed of each raw material solution is not limited, and may be appropriately selected based on use conditions. When the bismuth raw material solution is added, the addition speed is not limited, either, and may be appropriately selected based on use conditions.

It should be noted that if the silicon raw material is a liquid, the silicon raw material may be used as long as the silicon raw material is formulated into an aqueous dispersion of silicon dioxide at about 5% to 60% by weight like a silicon dioxide gel. When a liquid of other silicon atom-containing raw materials is prepared, it is preferable to prepare an aqueous solution or aqueous dispersion in which the concentration of the silicon atom-containing raw material is 5% or more by weight, especially 10% or more by weight, and 60% or less by weight, especially 50% or less by weight.

Similar to the aluminum raw material solution, the liquid of the silicon raw material is substantially free of an aluminum atom. Here, the "substantially free of" means that the aluminum content in the liquid of the silicon-containing raw material is 1% or less by weight, and preferably aluminum is not comprised at all.

The water content of the hydrogel supplied to the hydrothermal synthesis reaction is 20% or more by weight, especially 30% or more by weight, and 80% or less by weight, especially 70% or less by weight, in consideration of ease of generation of molecular sieve crystals and production costs.

The hydrogel prepared as described above may be hydrothermally synthesized immediately after preparation, but in order to obtain a molecular sieve with high crystallinity, it is preferable to cure the hydrogel for a specific duration under a specified temperature condition. The curing temperature is generally 100 °C or lower, preferably 80 °C or lower, and more preferably 60 °C or lower; its lower limit is not particularly limited, but is generally 0 °C or higher, and is preferably 10 °C or higher. The curing temperature during the curing may be constant, or may be gradually changing. The curing duration is not particularly limited, but may be generally 2 hours or more, 3 hours or more, 5 hours or more, or 8 hours or more, and generally 30 days or less, 10 days or less, 4 days or less, or 2 days or less.

<Hydrothermal synthesis>

The hydrothermal synthesis is carried out as follows: the hydrogel obtained from the above operations is put into a pressure-resistant container, and kept at a constant temperature, under an autogenous pressure, or under a gas pressure to a degree that does not hinder crystallization, with stirring conditions or conditions of rotating or swinging the container, so as to carry out the hydrothermal synthesis.

The reaction temperature during the hydrothermal synthesis is generally 90 °C or higher, preferably 120 °C or higher, and more preferably 150 °C or higher, and generally 300 °C or lower, preferably 250 °C or lower, and more preferably 220 °C or lower. The reaction duration is not particularly limited, but may be generally 2 hours or more, 6 hours or more, or 12 hours or more, and generally 30 days or less, 10 days or less, or 7 days or less. The reaction temperature in the reaction may be constant, or may be gradually changing.

After the above hydrothermal synthesis, the FER-type molecular sieve as the product is separated from the hydrothermal synthesis reaction mixture. The resulting FER-type molecular sieve (hereinafter referred to as a "template-containing FER-type molecular sieve") comprises one or more of an organic template, bismuth, and other alkali metals in its pores. The method of separating the template-containing molecular sieve from the hydrothermal synthesis reaction mixture is not particularly limited, and a method, such as filtration, decantation, or direct drying, may generally be used.

<Impurity removal, calcination, and ion exchange>

In order to remove the organic template, alkali metal ion, and the like used in the manufacturing process, the FER-type molecular sieves comprising template or the like separated and recovered from the hydrothermal synthesis reaction mixture may be washed with water and dried (for example, dried at 80 °C to 100 °C for 1 hour to 12 hours), and then the organic template and the alkali metal ion may be subsequently removed.

The template and/or alkali metal may be removed by a liquid phase treatment using an acidic solution and a chemical solution containing a template-decomposing component, an ion exchange treatment using a resin or the like, a thermal decomposition treatment, or a combination of these treatments. Generally, the included organic matters (e.g., the template or the like) can be removed by calcination at a temperature from 300 °C to 1000 °C in an air, or an oxygen-containing non-active gas atmosphere, or a non-active gas atmosphere, or by extraction using an organic solvent such as an aqueous ethanol solution.

In consideration of manufacturing, the template and the like are preferably removed by calcination. In this case, the calcination temperature is preferably 400 °C or higher, more preferably 450 °C or higher, and most preferably 500 °C or higher, and preferably 900 °C or lower, more preferably 850 °C or lower, and most preferably 800 °C or lower. The non-active gas may be a gas such as nitrogen, or may be a gas in which a non-active component such as water vapor is added (for example, 5% to 10% water vapor).

In addition, the alkali metal may be partially exchanged to H and NH4 using the ion exchange capacity of the zeolite, the method of which may be a known technique. It may be treated with an ammonium salt, such as NH4NO3, $NH_4Cl$, or $(NH_4)_2SO_4$, or an acid solution such as hydrochloric acid at room temperature to 100 °C and then washed with water. The NH4-type molecular sieve may be further converted to a H-type molecular sieve by calcination. Its calcination temperature is preferably 300 °C or higher, more preferably 350 °C or higher, and most preferably 400 °C or higher, and preferably 900 °C or lower, more preferably 800 °C or lower, and most preferably 600 °C or lower. The non-active gas may be a gas such as nitrogen, or may be a gas in which a non-active component such as water vapor is added (for example, 5% to 10% water vapor).

Similarly, ion exchange may be conducted between the hydrothermally synthesized zeolite or the zeolite obtained after removing the organic template and the bismuth source in the organic solvent using the ion exchange capacity of the zeolite. Then, the zeolite after the ion exchange may be dried (for example, dried at 80°C to 100°C for 1 hour to 12 hours), and calcined. Its calcination temperature is preferably 300 °C or higher, more preferably 350 °C or higher, and most preferably 400 °C or higher, and preferably 900 °C or lower, more preferably 800 °C or lower, and most preferably 600 °C or lower. The calcination duration may be from 1 hour to 6 hours, e.g., 2 hours, 3 hours, 4 hours, or 5 hours. The non-active gas may be a gas such as nitrogen, or may be a gas in which a non-active component such as water vapor is added (for example, 5% to 10% water vapor).

The calcinating device in the present disclosure is not particularly limited, and may be a common industrial kiln, such as a muffle furnace, a tunnel kiln, or a rotary kiln. In consideration of convenience of continuous production, the rotary kiln is preferably used.

Use method of the zeolite

The zeolite of the present disclosure may be used directly in the form of powders, or may be used in the form of a zeolite-containing mixture prepared by mixing the zeolite with a binder. The binder may be an inorganic binder such as silicon dioxide, aluminum oxide, or zirconium oxide, or may be an organic binder such as polysiloxane. Polysiloxane refers to an oligomer or polymer having a polysiloxane bond in the main chain, and also includes a substance formed by hydrolyzing a part of substituents of the polysiloxane bond main chain to a hydroxyl. The amount of the binder is not particularly limited, but may be from 1% to 20% by weight, and may be from 2% to 15% by weight in consideration of strength during shaping.

The zeolite or the zeolite-containing mixture in the present disclosure may also be used after granulation or shaping. The granulation or shaping method is not particularly limited, and various known methods may be used. Generally, the zeolite mixture is shaped and used as a shaped body. The shaped body may be of various shapes. For example, when the zeolite in the present disclosure is used as a catalyst for purifying nitrogen oxides in waste gas from a mobile object (e.g., a vehicle or a ship), the zeolite may be applied by coating or shaping to shape the zeolite into a honeycomb catalyst. The coating method generally includes mixing the zeolite with the inorganic binder such as silicon dioxide, aluminum oxide, or zirconium oxide to form a slurry, and coating the slurry on the surface of a honeycomb made of an inorganic material such as cordierite, then drying and calcination. The shaping method generally includes mixing the zeolite with the inorganic binder such as silicon dioxide or aluminum oxide, or an inorganic fiber such as an alumina fiber or a glass fiber, forming the mixture into a honeycomb by extrusion or compression, and then drying and calcination.

Nitrogen oxides and purification thereof

When the zeolite of the present disclosure is used as a catalyst, the zeolite purifies the nitrogen oxides by contacting with waste gas comprising the nitrogen oxides. The nitrogen oxides to be purified herein includes nitrogen monoxide, nitrogen dioxide, nitrous oxide, and the like. The purifying the nitrogen oxides herein refers to reacting the nitrogen oxides on the catalyst for conversion into nitrogen, oxygen, and the like. In this case, the nitrogen oxides may be directly reacted, or may coexist with a reducing agent in the catalyst for the purpose of improving the purification efficiency. When the reducing agent is used, the zeolite described herein can contribute to the purification reaction of the nitrogen oxides. In the catalyst for industrial waste gas purification, an alcohol may be used as the reducing agent as long as the alcohol has the reducing capacity at a temperature of the reduction treatment of the industrial waste gas. The reducing agent is not particularly limited, but may be preferably an alcohol having 6 carbon atoms or less, such as methanol, ethanol, propanol, or isopropanol, and more preferably methanol or ethanol. When the zeolite of the present disclosure is used as the catalyst, the zeolite may purify nitrogen oxides comprised in various waste gases discharged from a diesel vehicle, a gasoline vehicle, a stationary power-generating ship, agricultural machinery, construction machinery, a two-wheeled or three-wheeled motor vehicle, various gasoline or diesel engines for aircrafts, a boiler, a gas turbine, and the like.

EXAMPLES

The following examples are provided to facilitate better understanding of the present disclosure, and are not intended to impose any limitation on the present disclosure. Unless otherwise particularly specified, the test methods used in the following examples are conventional methods; and unless otherwise particularly specified, the employed materials, reagents, etc. are commercially available.

Determination by X-ray powder diffraction (XRD)

The X-ray diffraction instrument is Rigaku MiniFlex600 with a detection light source of Cu K$\alpha$ at a tube voltage of 40 kV and at a tube current of 40 mA, in a detection angle range from 3 to 55° and at a scanning speed of 8°/min. A phase structure of a synthesized zeolite is determined by X-ray diffraction: the ground sample powders are added into a square hole on a glass plate, and then the glass plate is inserted into an axis position of a goniometer, with a probe rotating at a speed of 2$\theta$/min under the irradiation of the Cu K$\alpha$ light source.

Determination by solid nuclear magnetic resonance (NMR)

The solid nuclear magnetic resonance instrument is Bruker Avance III HD 400WB at a resonance frequency of 104.3 MHz for $^{27}$Al NMR, at a repetition time of 0.1 s and at a rotation frequency of 10 kHz; and at a resonance frequency of 79.5 MHz for $^{29}$Si NMR, at a repetition time of 6 s and at a rotation frequency of 5 kHz.

Evaluation of catalyst activity

After punch forming, the resulting zeolite is pulverized and granulated. The granulated zeolite (2 ml) is filled into an atmospheric circulating fixed-bed reaction tube. At 1000 ml/min (space velocity SV=30000/hour), a gas containing the composition of Table 2 is circulated on the catalyst layer whilst heating the catalyst layer. The nitrogen oxide removal activity of the catalyst is evaluated using the following equations based on outlet concentrations of NO, $N_2O$, and $NO_2$ at different temperatures, respectively.

$$(\text{NO conversion rate}) = \{(\text{inlet concentration of NO})-(\text{outlet concentration of NO})\}/(\text{inlet concentration of NO})$$

$$(\text{N}_2 \text{ Selectivity}) = \{(\text{inlet concentration of NO})-(\text{outlet concentration of NO})-(\text{outlet concentration of NO}_2)-1/2 (\text{outlet concentration of N}_2\text{O})\}/\{(\text{inlet concentration of NO})-(\text{outlet concentration of NO})\}$$

Table 2

| NO concentration | 1000 ppm |
|---|---|
| Methanol concentration | 2000 ppm |

(continued)

| Nitrogen concentration | Balance |
|---|---|
| Water vapor concentration | 5.0% by volume |
| Oxygen concentration | 14.0% by volume |
| Gas flow rate | 1 L/min |
| Catalyst amount | 2 mL |
| Volumetric space velocity | 30000/hour |

Example 1

0.04 g of sodium hydroxide was dissolved in 15 g of water, and then 17 g of liquid sodium silicate (molar value: 3.3, referring to a molar ratio of $SiO_2$ to $Na_2O$ here and below) and 3.7 g of pyrrolidine were added to prepare a mixed solution. 2.94 g of aluminum sulfate octadecahydrate was dissolved in 26.5 g of water, then the solution was added to the above mixed solution dropwise, and the mixture was fully stirred to provide a hydrogel with the composition of: 17 $SiO_2$: 1 $Al_2O_3$: 11.9 $C_4H_9N$: 5.27 $Na_2O$: 680 $H_2O$. After stirring and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve A1. The molecular sieve A1 was calcined in air at 600 °C for 6 hours to remove an organic template to provide a molecular sieve A2.

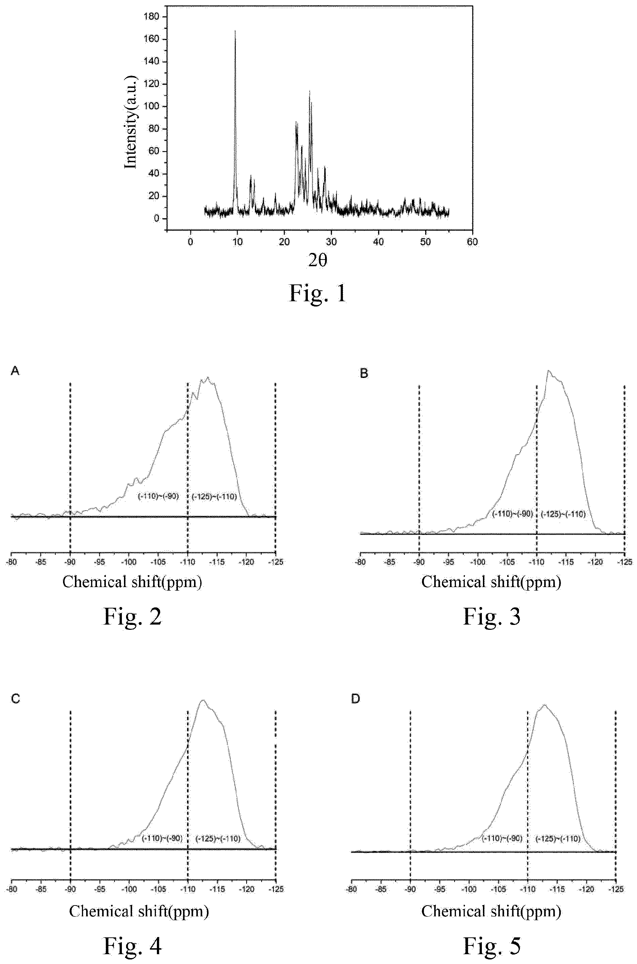

1.1 g of ammonium chloride was dissolved in 16 g of water, and then 4 g of the molecular sieve A2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve A. Based on the XRD result of the molecular sieve A shown in Fig. 1, the molecular sieve A is a FER-type molecular sieve. As shown by the $^{29}$Si solid NMR spectrum of the molecular sieve A in Fig. 2, its peak area in a chemical shift range from -90 to -110 ppm accounts for 45% of its peak area in a chemical shift range from -90 to -125 ppm. The result of the methanol-SCR catalytic activity of the molecular sieve A is shown in Table 3.

Example 2

0.04 g of sodium hydroxide was dissolved in 15 g of water, and then 17 g of liquid sodium silicate (molar value: 3.3) and 3.7 g of pyrrolidine were added to prepare a mixed solution. 1.77 g of aluminum sulfate octadecahydrate was dissolved in 27.1 g of water, then the solution was added to the above mixed solution dropwise, and the mixture was fully stirred to provide a hydrogel with the composition of: 28 $SiO_2$: 1 $Al_2O_3$: 19.6 $C_4H_9N$: 8.68 $Na_2O$: 1120 $H_2O$. After stirring and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve B1. The molecular sieve B1 was calcined in air at 600 °C for 6 hours to remove an organic template to provide a molecular sieve B2.

0.72 g of ammonium chloride was dissolved in 16 g of water, and then 4 g of the molecular sieve B2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve B. The XRD result of the molecular sieve B showed that the molecular sieve B is a FER-type molecular sieve. As shown by the $^{29}$Si solid NMR spectrum of the molecular sieve B in Fig. 3, its peak area in a chemical shift range from -90 to -110 ppm accounts for 36% of its peak area in a chemical shift range from -90 to -125 ppm. The result of the methanol-SCR catalytic activity of the molecular sieve B is shown in Table 3.

Example 3

0.04 g of sodium hydroxide was dissolved in 15 g of water, and then 17 g of liquid sodium silicate (molar value: 3.3) and 3.7 g of pyrrolidine were added to prepare a mixed solution. 1.665 g of aluminum sulfate octadecahydrate was dissolved in 28 g of water, then the solution was added to the above mixed solution dropwise, and the mixture was fully stirred to provide a hydrogel with the composition of: 30 $SiO_2$: 1 $Al_2O_3$: 21 $C_4H_9N$: 9.3 $Na_2O$: 1200 $H_2O$. After stirring

and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve C1. The molecular sieve C1 was calcined in air at 600 °C for 6 hours to remove an organic template to provide a molecular sieve C2.

0.72 g of ammonium chloride was dissolved in 16 g of water, and then 4 g of the molecular sieve C2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve C. The XRD result of the molecular sieve C showed that the molecular sieve C is a FER-type molecular sieve. As shown by the $^{29}$Si solid NMR spectrum of the molecular sieve C in Fig. 4, its peak area in a chemical shift range from -90 to -110 ppm accounts for 32.2% of its peak area in a chemical shift range from -90 to -125 ppm. The result of the methanol-SCR catalytic activity of the molecular sieve C is shown in Table 3.

Example 4

0.04 g of sodium hydroxide was dissolved in 15 g of water, and then 17 g of liquid sodium silicate (molar value: 3.3) and 3.7 g of pyrrolidine were added to prepare a mixed solution. 1.249 g of aluminum sulfate octadecahydrate was dissolved in 28 g of water, then the solution was added to the above mixed solution dropwise, and the mixture was fully stirred to provide a hydrogel with the composition of: $40\ SiO_2$: $1\ Al_2O_3$: $28\ C_4H_9N$: $12.4\ Na_2O$: $1600\ H_2O$. After stirring and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve D1. The molecular sieve D1 was calcined in air at 600 °C for 6 hours to remove an organic template to provide a molecular sieve D2.

0.72 g of ammonium chloride was dissolved in 16 g of water, and then 4 g of the molecular sieve D2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve D. The XRD result of the molecular sieve D showed that the molecular sieve D is a FER-type molecular sieve. As shown by the $^{29}$Si solid NMR spectrum of the molecular sieve D in Fig. 5, its peak area in a chemical shift range from -90 to -110 ppm accounts for 33% of its peak area in a chemical shift range from -90 to -125 ppm. The result of the methanol-SCR catalytic activity of the molecular sieve D is shown in Table 3.

Comparative Example 1

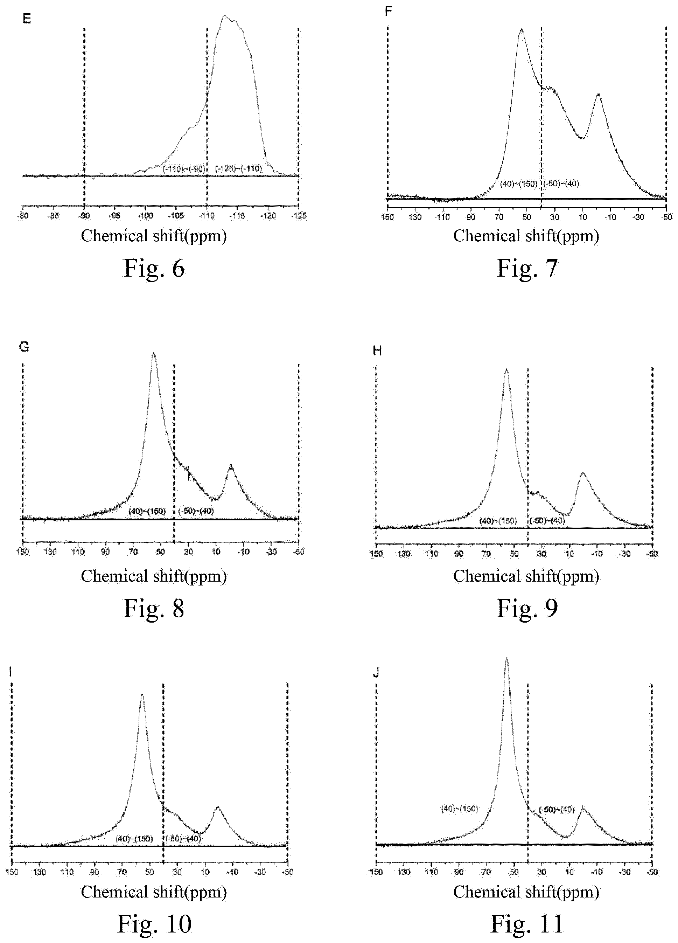

An NH4-type FER molecular sieve (HSZ-720NHA, molar ratio of $SiO_2/Al_2O_3$=18) from TOSOH (Japan) was calcined in air at 600 °C for 12 hours to provide a molecular sieve E. As shown by the $^{29}$Si solid NMR spectrum of the molecular sieve E in Fig. 6, its peak area in a chemical shift range from -90 to -110 ppm accounts for 23% of its peak area in a chemical shift range from -90 to -125 ppm. The result of the methanol-SCR catalytic activity of the molecular sieve E is shown in Table 3.

Example 5

0.3 g of bismuth nitrate pentahydrate was dissolved in 17.8 g of ethylene glycol to prepare a solution of bismuth nitrate in ethylene glycol. Then, the molecular sieve A prepared in Example 1 was added to the solution. The mixture was stirred at room temperature for 2 hours, and filtered. The recovered powder was dried at 80 °C for 12 hours, and then calcined in an air atmosphere comprising 10% water vapor at 600 °C for 5 hours to provide a molecular sieve F. The XRD result of the molecular sieve F showed that the molecular sieve F is a FER-type molecular sieve. As shown by the $^{27}$Al solid NMR spectrum of the molecular sieve F in Fig. 7, its peak area in a chemical shift range from -50 to 40 ppm accounts for 31.5% of its peak area in a chemical shift range from -50 to 150 ppm. The result of the methanol-SCR catalytic activity of the molecular sieve F is shown in Table 4.

Example 6

0.04 g of sodium hydroxide was dissolved in 15 g of water, and then 17 g of liquid sodium silicate (molar value: 3.3) and 3.7 g of pyrrolidine were added to prepare a mixed solution. 2.85 g of aluminum sulfate octadecahydrate was dissolved in 26.5 g of water, then the solution was added to the above mixed solution dropwise, and the mixture was fully stirred to provide an initial hydrogel. Then, 0.12 g of bismuth nitrate pentahydrate was dissolved in 7.5 g of ethylene glycol, and the above solution of bismuth nitrate in ethylene glycol was added to the hydrogel dropwise to provide a final hydrogel with the composition of: 17.4 $SiO_2$: 1 $Al_2O_3$: 0.03 12.18 $C_4H_9N$: 5.39 $Na_2O$: 696 $H_2O$. After stirring and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve G1. The molecular sieve G1 was calcined in air at 600 °C for 6 hours to remove an organic template to provide a molecular sieve G2.

1.1 g of ammonium chloride was dissolved in 16 g of water, and then 4 g of the molecular sieve G2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 600 °C for 5 hours to provide a molecular sieve G. The XRD result of the molecular sieve G showed that the molecular sieve G is a FER-type molecular sieve. As shown by the $^{27}$Al solid NMR spectrum of the molecular sieve G in Fig. 8, its peak area in a chemical shift range from -50 to 40 ppm accounts for 39.8% of its peak area in a chemical shift range from -50 to 150 ppm. The result of the methanol-SCR catalytic activity of the molecular sieve G is shown in Table 4.

Example 7

1.1 g of ammonium chloride was dissolved in 16 g of water, and then 4 g of the molecular sieve G2 synthesized in Example 6 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 700 °C for 5 hours to provide a molecular sieve H. The XRD result of the molecular sieve H showed that the molecular sieve H is a FER-type molecular sieve. As shown by the $^{27}$Al solid NMR spectrum of the molecular sieve H in Fig. 9, its peak area in a chemical shift range from -50 to 40 ppm accounts for 38.1% of its peak area in a chemical shift range from -50 to 150 ppm. The result of the methanol-SCR catalytic activity of the molecular sieve H is shown in Table 4.

Example 8

0.04 g of sodium hydroxide was dissolved in 15 g of water, and then 17 g of liquid sodium silicate (molar value: 3.3) and 3.7 g of pyrrolidine were added to prepare a mixed solution. 2.78 g of aluminum sulfate octadecahydrate was dissolved in 26.6 g of water, the solution was added to the above mixed solution dropwise, and the mixture was fully stirred to provide an initial hydrogel. Then, 0.2 g of bismuth nitrate pentahydrate was dissolved in 12.4 g of ethylene glycol, and the above solution of bismuth nitrate in ethylene glycol was added to the hydrogel dropwise to provide a final hydrogel with the composition of: 19.12 $SiO_2$: 1 $Al_2O_3$: 0.05 13.38 $C_4H_9N$: 5.93 $Na_2O$: 764.8 $H_2O$. After stirring and curing at room temperature for 12 hours, the hydrothermal synthesis was conducted on the hydrogel in a high temperature-resistant and pressure-resistant container at 160 °C for 72 hours, and then the reaction mixture was cooled. The powder obtained from filtration and recovery was dried at 100 °C for 2 hours to provide a template-containing molecular sieve I1. The molecular sieve I1 was calcined in air at 600 °C for 6 hours to remove an organic template to provide a molecular sieve 12.

1.1 g of ammonium chloride was dissolved in 16 g of water, and then 4 g of the molecular sieve I2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air comprising 10% water vapor at 600 °C for 5 hours to provide a molecular sieve I. The XRD result of the molecular sieve I showed that the molecular sieve I is a FER-type molecular sieve. As shown by the $^{27}$Al solid NMR spectrum of the molecular sieve I in Fig. 10, its peak area in a chemical shift range from -50 to 40 ppm accounts for 32.9% of its peak area in a chemical shift range from -50 to 150 ppm. The result of the methanol-SCR catalytic activity of the molecular sieve I is shown in Table 4

Example 9

0.04 g of sodium hydroxide was dissolved in 15 g of water, and then 17 g of liquid sodium silicate (molar value: 3.3) and 3.7 g of pyrrolidine were added to prepare a mixed solution. 1.71 g of aluminum sulfate octadecahydrate was dissolved in 27.1 g of water, the solution was added to the above mixed solution dropwise, and the mixture was fully stirred to provide an initial hydrosol. Then, 0.2 g of bismuth nitrate pentahydrate was dissolved in 12.2 g of ethylene glycol, and the above solution of bismuth nitrate in ethylene glycol was added to the hydrogel dropwise to provide a final hydrogel with the composition of: 30.4 $SiO_2$: 1 $Al_2O_3$: 0.08 21.28 $C_4H_9N$: 9.4 $Na_2O$: 1216 $H_2O$. After stirring and curing at room temperature for 12 hours, the hydrothermal synthesis was conducted on the hydrosol in a high temperature-resistant and pressure-resistant container at 160 °C for 72 hours, and the reaction mixture was cooled. The resulting powder was filtered, recovered, and dried at 100 °C for 2 hours to provide a template-containing molecular sieve J1. The molecular sieve J1 was calcined in air at 600 °C for 6 hours to remove an organic template to provide a molecular sieve J2.

0.72 g of ammonium chloride was dissolved in 16 g of water, and then 4 g of the molecular sieve J2 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air comprising 10% water vapor at 600 °C for 5 hours to provide a molecular sieve J. The XRD result of the molecular sieve J showed that the molecular sieve J is a FER-type molecular sieve. As shown by the $^{27}$Al solid NMR spectrum of the molecular sieve J in Fig. 11, its peak area in a chemical shift range from -50 to 40 ppm accounts for 32.2% of its peak area in a chemical shift range from -50 to 150 ppm. The result of the methanol-SCR catalytic activity of the molecular sieve J is shown in Table 4.

Comparative Example 2

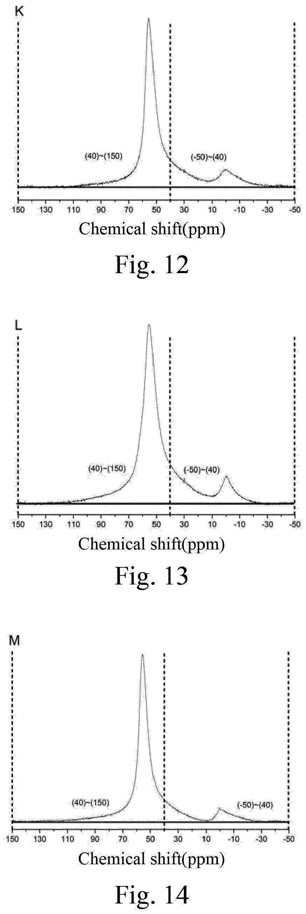

0.3 g of bismuth nitrate pentahydrate was dissolved in 17.8 g of ethylene glycol to prepare a solution of bismuth nitrate in ethylene glycol. Then, the molecular sieve E prepared in Comparative Example 1 was added to the solution. The mixture was stirred at room temperature for 2 hours, and filtered. The recovered powder was dried at 80 °C for 12 hours, and then calcined in an air atmosphere at 500 °C for 4 hours to provide a molecular sieve K. The XRD result of the molecular sieve K showed that the molecular sieve K is a FER-type molecular sieve. As shown by the $^{27}$Al solid NMR spectrum of the molecular sieve K in Fig. 12, its peak area in a chemical shift range from -50 to 40 ppm accounts for 26% of its peak area in a chemical shift range from - 50 to 150 ppm. The result of the methanol-SCR catalytic activity of the molecular sieve K is shown in Table 4.

Comparative Example 3

1.1 g of ammonium chloride was dissolved in 16 g of water, and then 4 g of the molecular sieve I2 synthesized in Example 8 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve L. The XRD result of the molecular sieve L showed that the molecular sieve L is a FER-type molecular sieve. As shown by the $^{27}$Al solid NMR spectrum of the molecular sieve L in Fig. 13, its peak area in a chemical shift range from -50 to 40 ppm accounts for 24.1% of its peak area in a chemical shift range from -50 to 150 ppm. The result of the methanol-SCR catalytic activity of the molecular sieve L is shown in Table 4.

Comparative Example 4

0.72 g of ammonium chloride was dissolved in 16 g of water, and then 4 g of the molecular sieve J2 synthesized in Example 9 was added to form a slurry. Ion exchange was conducted after the slurry was kept at 80 °C for reaction for 2 hours. The reaction mixture was cooled. The powder obtained from filtration and recovery was dried at 100 °C for 2 hours, and calcined in air at 500 °C for 2 hours to provide a molecular sieve M. The XRD result of the molecular sieve M showed that the molecular sieve M is a FER-type molecular sieve. As shown by the $^{27}$Al solid NMR spectrum of the molecular sieve M in Fig. 14, its peak area in a chemical shift range from -50 to 40 ppm accounts for 17.9% of its peak area in a chemical shift range from -50 to 150 ppm. The result of the methanol-SCR catalytic activity of the molecular sieve M is shown in Table 4.

Table 3

| | | $^{29}$Si NMR | NO conversion rate/% | | | $N_2$ selectivity/% | | |
|---|---|---|---|---|---|---|---|---|
| | | Area ratio% of (-110) to (-90) ppm | 250°C | 300°C | 350°C | 250°C | 300°C | 350°C |
| Example 1 | Molecular sieve A | 45 | 69.9 | 97.8 | 94.3 | 91.4 | 96.9 | 99.4 |
| Example 2 | Molecular sieve B | 36 | 78.5 | 99.7 | 93.5 | 90.4 | 97.7 | 99.1 |

(continued)

| | | $^{29}Si$ NMR | NO conversion rate/% | | | $N_2$ selectivity/% | | |
|---|---|---|---|---|---|---|---|---|
| | | Area ratio% of (-110) to (-90) ppm | 250°C | 300°C | 350°C | 250°C | 300°C | 350°C |
| Example 3 | Molecular sieve C | 32.2 | 75.7 | 98.7 | 92.5 | 91.2 | 95.6 | 99.0 |
| Example 4 | Molecular sieve D | 33 | 78.3 | 92.5 | 97.7 | 84.8 | 91.0 | 98.9 |
| Comparative Example 1 | Molecular sieve E | 23 | 24.1 | 37.4 | 54.7 | 94.2 | 94.7 | 97.6 |

Table 4

| | | $^{27}Al$ NMR | NO conversion rate/% | | | $N_2$ selectivity/% | | |
|---|---|---|---|---|---|---|---|---|
| | | Area ratio% of (-50) to (40) ppm | 250°C | 300°C | 350°C | 250°C | 300°C | 350°C |
| Example 5 | Molecular sieve F | 59.3 | 74.1 | 84.2 | 71.5 | 92.3 | 96.4 | 98.7 |
| Example 6 | Molecular sieve G | 39.8 | 85.6 | 96.2 | 82.9 | 87.9 | 95.7 | 99.0 |
| Example 7 | Molecular sieve H | 38.1 | 66.0 | 87.3 | 74.6 | 90.9 | 96.6 | 98.5 |
| Example 8 | Molecular sieve I | 32.9 | 74.4 | 90.1 | 72.5 | 91.0 | 97.7 | 100.0 |
| Example 9 | Molecular sieve J | 32.2 | 78.2 | 89.6 | 64.5 | 92.3 | 97.9 | 98.6 |
| Comparative Example 2 | Molecular sieve K | 26 | 87.1 | 88.3 | 84.1 | 69.8 | 95.9 | 97.7 |
| Comparative Example 3 | Molecular sieve L | 24.1 | 85.3 | 86.3 | 81.2 | 58.7 | 87.5 | 98.5 |
| Comparative Example 4 | Molecular sieve M | 17.9 | 54.0 | 35.6 | 48.5 | 55.6 | 84.6 | 95.7 |

As can be seen from the results of the above examples and comparative examples, the FER molecular sieve with the peak area in the chemical shift range from -90 to -110 ppm accounting for 25% or more of the peak area in the chemical shift range from -90 to -125 ppm in the $^{29}Si$ solid NMR spectrum shows better methanol-SCR catalytic activity, and also has good nitrogen selectivity. The bismuth-containing FER molecular sieve with the peak area in the chemical shift range from -50 to 40 ppm accounting for 28% or more of the peak area in the chemical shift range from -50 to 150 ppm in the $^{27}Al$ solid NMR spectrum shows better methanol-SCR catalytic activity, greatly reduced amount of $N_2O$ generated at 250 °C, and significantly improved nitrogen selectivity.

While the embodiments herein are described by referring to specific examples, it should be understood that those skilled in the art will make any modifications and alterations without departing from the scope and spirit of the present disclosure.

**Claims**

1. A FER-type zeolite, comprising silicon, aluminum, and oxygen as skeletal atoms, wherein a molar ratio of silicon atoms to aluminum atoms is 2-100:1, and when the zeolite is analyzed by $^{29}Si$ solid NMR spectrum, a peak area in a chemical shift range from -90 to -110 ppm accounts for 25% or more of a peak area in a chemical shift range from -90 to -125 ppm.

2. The FER-type zeolite according to claim 1, wherein a mole number of the aluminum atoms accounts for 1% to 33% of a total mole number of non-oxygen atoms in the zeolite; and/or
   a cation outside a skeleton of the zeolite further comprises a hydrogen ion.

3. The FER-type zeolite according to claim 1 or 2, wherein the skeletal atoms of the zeolite further comprise an atom of one or more of other elements selected from the group consisting of titanium, zirconium, vanadium, chromium, manganese, iron, cobalt, zinc, gallium, germanium, arsenic, tin, and boron; and/or

   a mole number of the atom of the other elements accounts for 40% or less, e.g., 30% or less, e.g., 20% or less, of the total mole number of the non-oxygen atoms in the zeolite; and/or
   the zeolite further comprises a cation of one or more selected from the group consisting of an alkali metal, an alkali earth metal, a rare earth metal, and a transition metal.

4. A bismuth-containing FER-type zeolite, comprising silicon, aluminum, and oxygen as skeletal atoms, wherein a molar ratio of silicon atoms to aluminum atoms is 2-100:1, and when the zeolite is analyzed by $^{27}$Al solid NMR spectrum, a peak area in a chemical shift range from -50 to 40 ppm accounts for 28% or more of a peak area in a chemical shift range from -50 to 150 ppm.

5. The FER-type zeolite according to claim 4, wherein a content of bismuth is 0.05 mass% or more and 20mass% or less; and/or

   a mole number of the silicon atoms accounts for 50% to 95% of a total mole number of non-oxygen atoms in the zeolite; and/or
   a cation outside a skeleton of the zeolite further comprises a hydrogen ion.

6. The FER-type zeolite according to claim 4 or 5, wherein the skeletal atoms of the zeolite further comprise an atom of one or more of other elements selected from the group consisting of titanium, zirconium, vanadium, chromium, manganese, iron, cobalt, zinc, gallium, germanium, arsenic, tin, and boron; and/or

   a mole number of the atom of the other elements accounts for 40% or less, e.g., 30% or less, e.g., 20% or less, of the total mole number of the non-oxygen atoms in the zeolite; and/or
   the zeolite further comprises a cation of one or more selected from the group consisting of an alkali metal, an alkali earth metal, a rare earth metal, and a transition metal.

7. A method for preparing the FER-type zeolite according to any one of claims 1 to 3, comprising:

   (a) mixing a mixture comprising a silicon source, an aluminum source, an organic template, and an optional inorganic base in water to provide an initial gel;
   (b) subjecting the initial gel to a hydrothermal synthesis reaction to obtain a reaction product; and
   (c) calcinating the reaction product and removing the organic template to obtain the FER-type zeolite,

   wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to provide the FER-type zeolite.

8. The method according to claim 7, wherein in the initial gel, a molar ratio of the silicon source, the aluminum source, the organic template R, the optional inorganic base AOH, and the water is 5-100 $SiO_2$: 1 $Al_2O_3$: 5-50 R: 2-20 $A_2O$: 200-2000 $H_2O$; and/or
   the organic template comprises one or more nitrogen-containing alicyclic heterocyclic compounds, for example, the organic template is one or more selected from the group consisting of pyrrolidine, morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, N-methylpyrrolidone, and hexamethyleneimine, for example, the organic template is one or more selected from the group consisting of pyrrolidine, morpholine, hexamethyleneimine, and piperidine, for example, the organic template is pyrrolidine.

9. A method for preparing the FER-type zeolite according to any one of claims 4 to 6, comprising:

(a) mixing a mixture comprising a silicon source, an aluminum source, an organic template, and an optional inorganic base in water to obtain a hydrogel, and mixing the hydrogel and a solution of a bismuth source dissolved in an organic solvent to obtain an initial gel;
(b) subjecting the initial gel to a hydrothermal synthesis reaction to obtain a reaction product; and
(c) calcinating the reaction product and removing the organic template to obtain the FER-type zeolite,

wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to obtain the FER-type zeolite.

10. The method according to claim 9, wherein in the initial gel, a molar ratio of the silicon source, the aluminum source, the bismuth source, the organic template R, the optional inorganic base AOH, and the water is 5-100 $SiO_2$: 1 $Al_2O_3$: 0-0.5 5-50 R: 2-20 $A_2O$: 200-2000 $H_2O$; and/or
the organic template comprises one or more nitrogen-containing alicyclic heterocyclic compounds, for example, the organic template is one or more selected from the group consisting of pyrrolidine, morpholine, N-methylmorpholine, piperidine, piperazine, N,N'-dimethylpiperazine, 1,4-diazabicyclo(2,2,2)octane, N-methylpiperidine, 3-methylpiperidine, quinuclidine, N-methylpyrrolidone, and hexamethyleneimine, for example, the organic template is one or more selected from the group consisting of pyrrolidine, morpholine, hexamethyleneimine, and piperidine, for example, the organic template is pyrrolidine.

11. A method for preparing the FER-type zeolite according to any one of claims 4 to 6, comprising:

(a) mixing a mixture comprising a silicon source, an aluminum source, an organic template, and an optional inorganic base with water to obtain an initial gel;
(b) subjecting the initial gel to a hydrothermal synthesis reaction to obtain a reaction product;
(c) calcinating the reaction product and removing the organic template to obtain a zeolite; and
(d) conducting an ion exchange or impregnation of the zeolite and a bismuth source in an organic solvent, and then conducting calcination to obtain the FER-type zeolite,

wherein if the initial gel comprises an alkali metal ion, an ion exchange is conducted between the zeolite obtained by calcinating the reaction product and removing the organic template in step (c) and an ammonium salt to remove a portion or all of the alkali metal ions comprised in the zeolite, and then calcination is conducted to obtain the zeolite in step (c).

12. A catalytic reactor for purifying nitrogen oxides, comprising the FER-type zeolite according to any one of claims 1 to 6 or the FER-type zeolite prepared using the method according to any one of claims 7 to 11 as a denitration catalyst.

13. A system for purifying nitrogen oxides, comprising the catalytic reactor for purifying nitrogen oxides according to claim 12.

14. A denitration method, comprising conducting selective catalytic reduction denitration using the FER-type zeolite according to any one of claims 1 to 6 or the FER-type zeolite prepared using the method according to any one of claims 7 to 11 as a denitration catalyst, and using an alcohol containing 6 carbon atoms or less as a reducing agent.

15. Use of the FER-type zeolite according to any one of claims 1 to 6 or the FER-type zeolite prepared using the method according to any one of claims 7 to 11 in a process of selective catalytic reduction denitration.

Fig. 1

Fig. 2

Fig. 3

Fig. 4

Fig. 5

Fig. 6

Fig. 7

Fig. 8

Fig. 9

Fig. 10

Fig. 11

K

(40)~(150)  (-50)~(40)

150  130  110  90  70  50  30  10  -10  -30  -50
Chemical shift(ppm)

Fig. 12

L

(40)~(150)  (-50)~(40)

150  130  110  90  70  50  30  10  -10  -30  -50
Chemical shift(ppm)

Fig. 13

M

(40)~(150)  (-50)~(40)

150  130  110  90  70  50  30  10  -10  -30  -50
Chemical shift(ppm)

Fig. 14

20

## INTERNATIONAL SEARCH REPORT

| | |
|---|---|
| | International application No. |
| | **PCT/CN2019/125057** |

| **A.** | **CLASSIFICATION OF SUBJECT MATTER** |
|---|---|

B01J 29/65(2006.01)i; B01J 29/69(2006.01)i; B01D 53/94(2006.01)i

According to International Patent Classification (IPC) or to both national classification and IPC

| **B.** | **FIELDS SEARCHED** |
|---|---|

Minimum documentation searched (classification system followed by classification symbols)

B01J, B01D

Documentation searched other than minimum documentation to the extent that such documents are included in the fields searched

Electronic data base consulted during the international search (name of data base and, where practicable, search terms used)

DWPI; SIPOABS; CNABS; CNTXT; ISI WEB of SCIENCE: FER, ferrierite, ZSM-21.ZSM-35, ZSM-38, 镁碱沸石, 铋, Bi, 硝酸铋, Bi(NO3)3, SCR, 醇, 甲醇, 乙醇, methanol, ethyl alcohol, MeOH, 还原剂, reduc+, 硫酸铵, 硫铵, 铵盐, 铵化, ammonium, sulfate, ammonium, 交换, 酸化, 氢型, ion exchange, NMR, 峰面积, peak area, 位移, 核磁, 南开大学, 陈海军, 韩飞, 袁梦琦, 钱东岳, 孙涵

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 110013875 A (HENAN NORMAL UNIVERSITY) 16 July 2019 (2019-07-16) reference example 1 | 1-3, 7-8 |
| Y | CN 110013875 A (HENAN NORMAL UNIVERSITY) 16 July 2019 (2019-07-16) reference example 1 | 12-15 |
| X | CN 86108200 A (SHELL INTERNATIONAL RESEARCH MAATSCHAPPIJ B.V.) 09 September 1987 (1987-09-09) embodiments | 1-3, 7-8 |
| Y | CN 86108200 A (SHELL INTERNATIONAL RESEARCH MAATSCHAPPIJ B.V.) 09 September 1987 (1987-09-09) embodiments | 12-15 |
| Y | CN 109070067 A (HITACHI ZOSEN CORPORATION) 21 December 2018 (2018-12-21) embodiment 1, description, paragraphs 90-112 | 12-15 |
| Y | CN 106132540 A (HITACHI ZOSEN CORPORATION) 16 November 2016 (2016-11-16) embodiments | 12-15 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 August 2020** | **09 September 2020** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2019/125057** |

**C.      DOCUMENTS CONSIDERED TO BE RELEVANT**

| Category* | Citation of document, with indication, where appropriate, of the relevant passages | Relevant to claim No. |
|---|---|---|
| Y | CN 106413888 A (HITACHI ZOSEN CORPORATION) 15 February 2017 (2017-02-15) embodiments | 12-15 |
| A | WO 02072244 A2 (KRUPP UHDE GMBH.) 19 September 2002 (2002-09-19) entire document | 1-15 |

Form PCT/ISA/210 (second sheet) (January 2015)

<table>
<tr><td colspan="2">INTERNATIONAL SEARCH REPORT<br>Information on patent family members</td><td colspan="2">International application No.<br><br>**PCT/CN2019/125057**</td></tr>
</table>

| Patent document cited in search report | | | Publication date (day/month/year) | Patent family member(s) | | | Publication date (day/month/year) |
|---|---|---|---|---|---|---|---|
| CN | 110013875 | A | 16 July 2019 | | None | | |
| CN | 86108200 | A | 09 September 1987 | CN | 1011224 | B | 16 January 1991 |
| | | | | AU | 588653 | B2 | 21 September 1989 |
| | | | | ES | 2012764 | B3 | 16 April 1990 |
| | | | | JP | S62153115 | A | 08 July 1987 |
| | | | | AU | 6616386 | A | 11 June 1987 |
| | | | | EP | 0236590 | A1 | 16 September 1987 |
| | | | | DK | 587886 | A | 10 June 1987 |
| | | | | HU | T42968 | A | 28 September 1987 |
| | | | | JP | H0829935 | B2 | 27 March 1996 |
| | | | | BR | 8606040 | A | 15 September 1987 |
| | | | | CA | 1291979 | C | 12 November 1991 |
| | | | | DK | 587886 | D0 | 08 December 1986 |
| | | | | AT | 48986 | T | 15 January 1990 |
| | | | | DE | 3667778 | D1 | 01 February 1990 |
| | | | | KR | 950003414 | B1 | 12 April 1995 |
| | | | | DK | 166450 | B1 | 24 May 1993 |
| | | | | SG | 22290 | G | 13 July 1990 |
| | | | | KR | 880002569 | A | 09 May 1988 |
| | | | | EP | 0236590 | B1 | 27 December 1989 |
| | | | | US | 4795623 | A1 | 03 January 1989 |
| CN | 109070067 | A | 21 December 2018 | WO | 2017169450 | A1 | 05 October 2017 |
| | | | | US | 2019083964 | A1 | 21 March 2019 |
| | | | | KR | 20180132623 | A | 12 December 2018 |
| | | | | EP | 3437736 | A1 | 06 February 2019 |
| | | | | EP | 3437736 | A4 | 20 November 2019 |
| | | | | JP | 2017177060 | A | 05 October 2017 |
| CN | 106132540 | A | 16 November 2016 | CN | 106132540 | B | 17 March 2020 |
| | | | | US | 2017106356 | A1 | 20 April 2017 |
| | | | | EP | 3542900 | A1 | 25 September 2019 |
| | | | | EP | 3124115 | A4 | 25 October 2017 |
| | | | | JP | WO2015147257 | A1 | 13 April 2017 |
| | | | | DK | 3124115 | T3 | 05 August 2019 |
| | | | | EP | 3124115 | A1 | 01 February 2017 |
| | | | | WO | 2015147257 | A1 | 01 October 2015 |
| | | | | JP | 6663842 | B2 | 13 March 2020 |
| | | | | US | 2018345258 | A1 | 06 December 2018 |
| | | | | KR | 20160140610 | A | 07 December 2016 |
| | | | | EP | 3124115 | B1 | 15 May 2019 |
| CN | 106413888 | A | 15 February 2017 | WO | 2015119069 | A1 | 13 August 2015 |
| | | | | KR | 20160119061 | A | 12 October 2016 |
| | | | | EP | 3103550 | A1 | 14 December 2016 |
| | | | | US | 2017165654 | A1 | 15 June 2017 |
| | | | | JP | WO2015119069 | A1 | 23 March 2017 |
| | | | | EP | 3103550 | A4 | 18 October 2017 |
| | | | | JP | 6572133 | B2 | 04 September 2019 |
| WO | 02072244 | A2 | 19 September 2002 | EA | 200400791 | A1 | 28 October 2004 |
| | | | | KR | 20040010605 | A | 31 January 2004 |
| | | | | EP | 1372827 | A2 | 02 January 2004 |

Form PCT/ISA/210 (patent family annex) (January 2015)

## INTERNATIONAL SEARCH REPORT
**Information on patent family members**

| International application No. |
| --- |
| **PCT/CN2019/125057** |

| Patent document cited in search report | Publication date (day/month/year) | Patent family member(s) | | | Publication date (day/month/year) |
| --- | --- | --- | --- | --- | --- |
| | | KR | 100858010 | B1 | 11 September 2008 |
| | | ZA | 200306770 | A | 03 May 2004 |
| | | US | 7259121 | B2 | 21 August 2007 |
| | | ZA | 200306770 | B | 03 May 2004 |
| | | CN | 1582196 | A | 16 February 2005 |
| | | ES | 2265501 | T3 | 16 February 2007 |
| | | DK | 1372827 | T3 | 18 September 2006 |
| | | AU | 2002257618 | B2 | 15 March 2007 |
| | | EA | 005469 | B1 | 24 February 2005 |
| | | AT | 327028 | T | 15 June 2006 |
| | | DE | 10112396 | A1 | 02 October 2002 |
| | | NO | 20033886 | L | 02 September 2003 |
| | | NO | 20033886 | A | 02 September 2003 |
| | | EP | 1372827 | B1 | 24 May 2006 |
| | | PT | 1372827 | T | 29 September 2006 |
| | | EA | 005788 | B1 | 30 June 2005 |
| | | WO | 02072244 | A3 | 12 December 2002 |
| | | DE | 50206895 | D1 | 29 June 2006 |
| | | NO | 20033886 | D0 | 02 September 2003 |
| | | NO | 336143 | B1 | 26 May 2015 |
| | | EA | 200301000 | A1 | 26 February 2004 |
| | | CN | 1269555 | C | 16 August 2006 |
| | | US | 2004110627 | A1 | 10 June 2004 |
| | | PT | 1372827 | E | 29 September 2006 |

Form PCT/ISA/210 (patent family annex) (January 2015)

**EP 4 005 671 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013146729 A
- JP 2013226544 B
- JP 2014172007 B
- WO 2017057736 A

**Non-patent literature cited in the description**

- *ACS Catal.,* 2018, vol. 8 (4), 2699-2708
- *Environ. Sci. Technol.,* 2015, (49), 481-488
- *Appl. Catal. B-Environ.,* 2012, (126), 275-289
- *Microporous Mesoporous Mater,* 2015, vol. 203, 163-169
- *Appl. Catal. B-Environ.,* 2012, vol. 123-124, 134-140
- *J. Catal.,* 2019, vol. 377, 480-493